Europäisches Patentamt

(19) **European Patent Office**

**Office européen des brevets**

(11) Numéro de publication: **0 177 383**
**B1**

(12) **FASCICULE DE BREVET EUROPEEN**

(45) Date de publication du fascicule du brevet: **02.05.90**

(51) Int. Cl.⁵: **G 01 H 11/04, H 04 R 15/00**

(21) Numéro de dépôt: **85401673.0**

(22) Date de dépôt: **22.08.85**

(54) **Transducteur omnidirectionnel d'ondes élastiques à large bande passante et procédé de fabrication.**

(30) Priorité: **28.08.84 FR 8413296**
**13.11.84 FR 8417282**
**13.11.84 FR 8417283**

(43) Date de publication de la demande:
**09.04.86 Bulletin 86/15**

(45) Mention de la délivrance du brevet:
**02.05.90 Bulletin 90/18**

(84) Etats contractants désignés:
**DE FR GB IT NL**

(56) Documents cités:
**EP-A-0 063 094**
**EP-A-0 075 911**
**GB-A- 402 831**
**US-A-2 670 446**
**US-A-3 881 165**

**ENGINEERING, vol. 207, 17 janvier 1969, pages 117-120, Londres, GB; B.K. GAZEY: "Underwater electroacoustic transducers"**

(73) Titulaire: **COMMISSARIAT A L'ENERGIE ATOMIQUE**
**31/33, rue de la Fédération**
**F-75015 Paris (FR)**

(73) Titulaire: **Klein, Siegfried, Dr.**
**42, rue de la Tour d'Auvergne**
**F-75009 Paris (FR)**

(72) Inventeur: **Klein, Siegfried**
**42, rue de la Tour d'Auvergne**
**F-75009 Paris (FR)**

(74) Mandataire: **Mongrédien, André et al**
**c/o BREVATOME 25, rue de Ponthieu**
**F-75008 Paris (FR)**

EP 0 177 383 B1

Courier Press, Leamington Spa, England.

## Description

La présente invention a pour objet un transducteur omnidirectionnel d'ondes élastiques à large bande passante. Par ondes élastiques, on entend une onde de pression se propageant dans un liquide ou dans un gaz. Dans ce dernier cas, une onde élastique est souvent appelée onde acoustique. La transducteur peut être utilisé en émission, et il convertit alors un signal électrique en une onde élastique, ou en réception, et il convertit alors une onde élastique en un signal électrique. Le transducteur de l'invention est adapté notamment à la transmission des ondes sonores et ultrasonores.

La transmission sous-marine de signaux élastiques de fréquence élevée (ondes ultrasonores) constitue un domaine privilégié d'application de l'invention. Le transducteur peut y être utilisé comme hydrophone aussi bien en récepteur qu'en émetteur. La large bande passante de ce transducteur autorise la transmission de signaux de fréquence élevée tels que par exemple des signaux de télévision spécialement adaptés pour la transmission dans l'eau (bande passante d'environ 200 kHz), des signaux de parole ou tous autres signaux d'information.

La reproduction sonore de haute-fidélité constitue un autre domaine privilégié d'application de l'invention. Le transducteur utilisé en émission réalise en haut-parleur de hautes performances à large bande passante.

Le principe du transducteur de l'invention est fondé sur l'effet de magnétostriction. La magnétostriction est la propriété pour certains corps de subir une modification géométrique (contraction, dilatation, flexion, torsion, . . .) lorsqu'ils sont soumis à l'influence d'un champ magnétique. Les alliages métalliques et en particulier les composés ferromagnétiques sont des matériaux magnétostrictifs.

L'utilisation de tels matériaux pour la conversion d'une onde électrique en une onde élastique n'est pas nouvelle. Elle est décrite notamment dans le brevet US—A—2 670 446 et dans la revue "Engineering" janvier 1969—pages 117—120, ainsi que dans le brevet FR—A—2 340 014 intitulé "transducteur électroacoustique à noyau magnétostrictif".

Dans ce brevet, le transducteur comporte principalement un barreau magnétostrictif disposé dans un solénoïde. Lorsqu'un signal de tension électrique est appliqué aux bornes de la bobine, il se crée dans l'axe du solénoïde un champ magnétique qui dilate ou contracte le barreau magnétostrictif selon la nature du matériau magnétostrictif employé. Ceci crée, au niveau de chacune des extrémités du barreau magnétostrictif, une onde élastique qui se propage suivant une direction sensiblement parallèle à l'axe du barreau magnétostrictif.

Il s'agit donc ici d'un transducteur électroacoustique monodirectionnel puisque l'onde élastique n'est émise que suivant la direction de l'axe du barreau. Ce caractère d'émission axial n'est pas souhaité dans toutes les applications et peut même constituer un inconvénient important, notamment dans le cas de la reproduction d'ondes sonores en haute fidélité où l'on désire au contraire que l'onde élastique soit émise avec la même intensité dans toutes les directions.

Le brevet EP—A—0 063 094 ou aussi FR—A—2 503 516 intitulé "haut-parleur omnidirectionnel pour les fréquences aigues du spectre sonore" décrit un transducteur électroacoustique utilisable dans l'air qui autorise la production d'une onde élastique sensiblement omnidirectionnelle à partir de la dilatation linéaire ou de la contraction linéaire selon le matériau employé, d'un barreau magnétostrictif. On a représenté sur la figure 1 un mode de réalisation d'un haut-parleur selon l'enseignement de ce brevet.

Ce haut-parleur comprend essentiellement deux hémisphères rigides 2 et 4 reliés l'un à l'autre par un joint annulaire élastique 6, auquel ils peuvent être fixés par collage, de manière à former une sphère pulsante, et un élément de commande 8 disposé à l'intérieur de la sphère et relié rigidement aux hémisphères 2 et 4.

L'élément de commande 8 a une forme allongée et peut subir une variation de longueur en réponse à un signal électrique devant être converti en onde élastique. Cet élément de commande est orienté à l'intérieur de la sphère de telle manière que les forces résultant de ces variations de longueur soient transmises aux hémisphères 2 et 4 dans des directions perpendiculaires au plan de raccordement desdits hémisphères.

La longueur de cet élément de commande 8 est de préférence inférieur au diamètre de la sphère et il est alors relié aux hémisphères 2 et 4 par des pièces rigides de transmission 10 et 12 qui prennent perpendiculairement appui sur les hémisphères 2 et 4 à des endroits suffisamment éloignés de la région de leurs sommets pour que chacun desdits hémisphères se déplace ou vibre d'un seul tenant, en réponse aux variations de longueur de l'élément de commande 8. Ces pièces de transmission ont sensiblement la forme d'une calotte sphérique.

L'élément de commande 8 est constitué d'un barreau 14, à section circulaire ou carrée, en un matériau magnétostrictif, autour duquel est disposée une bobine d'induction 16. Le signal électrique devant être converti en onde élastique est appliqué aux extrémités de la bobine 16 par deux conducteurs électriques 18 et 20 qui passent à travers une ouverture formée dans le joint annulaire 6.

Les pièces de transmission 10 et 12 permettent de convertir la dilatation linéaire du barreau magnétostrictif 14 en un déplacement de chacun des deux hémisphères 2 et 4. L'onde élastique produire est donc sensiblement omnidirectionnelle.

Cependant, l'onde produite ne peut être parfaitement omnidirectionnelle. Ceci est dû en partie à la présence du joint annulaire élastique 6 qui relie les deux hémisphères et qui interdit donc l'émission de l'onde sonore dans on plan, et ceci est dû également au fait que les pièces de transmission ne modifient pas le caractère linéaire de la force transmise. In ne s'agit donc pas exactement d'une sphère pulsante, c'est-à-dire ayant un rayon variable mais identique en chaque point à un instant donné, mais simplement de deux hémisphères ayant simultanément un mouvement linéaire de même direction et de sens opposé. C'est aussi le cas du haut-parleur décrit dans le brevet EP—A—0 063 094.

Le but de l'invention est de remédier aux inconvénients des dispositifs connus, notamment à leur absence de réelle omnidirectionnalité.

Ce but est atteint par un transducteur conforme à la revendication 1 ou fabriqué selon le procédé de la revendication 12.

La membrane du transducteur de l'invention peut également être en forme de surface non fermée; dans le cas d'une forme hémisphérique par exemple, le transducteur est omnidirectionnel dans un demi-plan de l'espace.

De manière avantageuse, la membrane est équipée de moyens pour égaliser ses pressions interne et externe. Ceci est particulièrement important dans le cas par exemple où l'on désire utiliser le transducteur sous l'eau à des profondeurs variables.

L'égalisation des pressions interne et externe peut être réalisée simplement en perçant au moins un orifice de petite dimension dans la membrane. La pression sur la face externe de la membrane peut également être compensée en remplissant le volume intérieur de la membrane par un matériau élastique. Dans le cas où le membrane est plongée dans un liquide, par exemple de l'eau, la compensation n'est parfaite que pour une profondeur donnée. Ce mode de réalisation permet toutefois d'utiliser le transducteur sur une certaine plage de profondeur.

De manière préférée, le volume intérieur de la membrane est rempli d'un matériau absorbant les ondes élastiques, tel que du coton ou de la laine de verre, pour absorber les ondes élastiques émises par chaque élément de surface de la membrane dans ledit volume intérieur afin d'éviter des reflexions parasites.

Les caractéristiques et avantages de l'invention ressortiront mieux de la description qui va suivre, donnée à titre illustratif mais non limitatif, en référence aux dessins annexés, sur lesquels:

—la figure 1, déjà décrite, illustre un transducteur électroacoustique sensiblement omnidirectionnel selon l'art antérieur,

—la figure 2 illustre un premier mode de réalisation du transducteur omnidirectionnel d'ondes élastiques de l'invention, dans lequel la membrane est constituée par une couche magnétostrictive,

—la figure 3 illustre une variante de réalisation du transducteur de la figure 2 dans lequel la membrane est obtenue à partir d'une bande magnétostrictive,

—la figure 4 illustre une autre variante de réalisation du transducteur omnidirectionnel d'ondes élastiques de la figure 2,

—les figures 5a et 5b sont des chronogrammes représentant respectivement un signal électrique $V_e$ appliqué à la membrane des transducteurs des figures 2 et 3 et l'onde élastique A correspondante émise,

—les figures 6a et 6b sont des chronogrammes représentant respectivement un signal électrique $V_e$ appliqué à la membrane du transducteur de la figure 4 et l'onde élastique A correspondante émise,

—la figure 7 illustre un deuxième mode de réalisation du transducteur de l'invention dans lequel le moyen de commande électrique est un conducteur électrique isolé bobiné sur la membrane,

—la figure 8 illustre une variante de réalisation du transducteur de la figure 7,

—la figure 9 illustre un troisième mode de réalisation du transducteur de l'invention dans lequel la membrane est obtenue par bobinage d'un fil magnétostrictif,

—la figure 10 montre l'enroulement d'un conducteur électrique constituant le moyen de commande électrique autour du fil magnétostrictif du transducteur de la figure 9,

—la figure 11 illustre un mode de réalisation du transducteur de l'invention à membrane cylindrique,

—la figure 12 illustre un mode de réalisation du transducteur de l'invention dont la membrane est une portion de cylindre, et

—la figure 13 illustre l'application d'un transducteur omnidirectionnel d'onde élastiques à membrane sphérique conforme à l'invention à la production d'une onde élastique intense parfaitement unidirectionnelle.

Dans la description qui suit, on décrit plusieurs modes de réalisation d'un transducteur selon l'invention dans lequel la membrane est une sphère. Il est bien entendu que cette forme est prise à titre d'exemple et que le transducteur de l'invention peut être pourvu d'une membrane ayant une forme quelconque qui peut être fermée (ellipsoïde, cylindre fermé, ...) ou ouverte (hémisphérique, cône, cylindre, ouvert, ...). Cette membrane n'est pas nécessairement une surface de révolution.

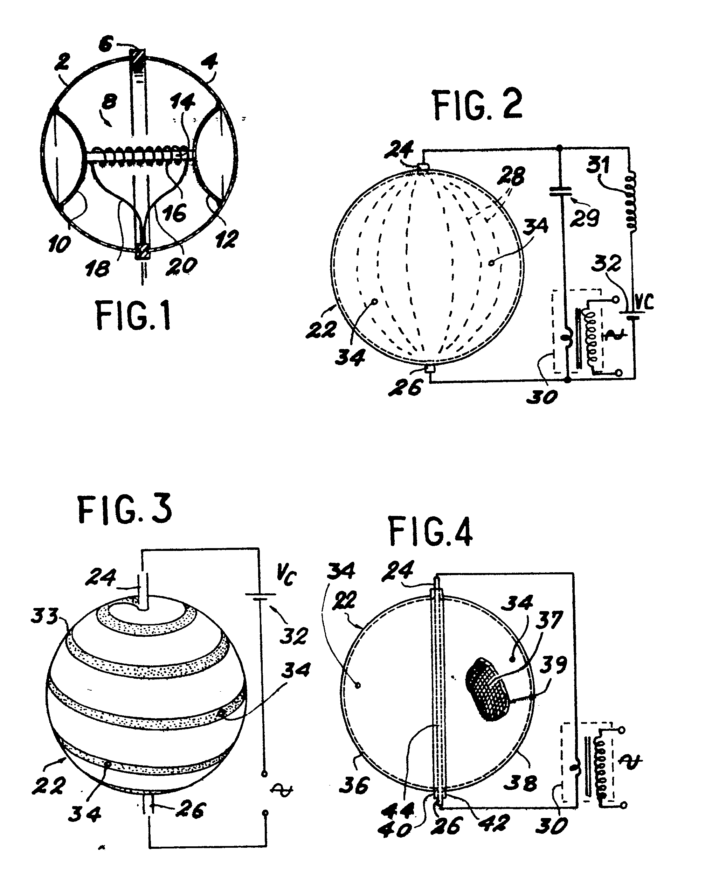

On a représenté sur la figure 2 un premier mode de réalisation du transducteur omnidirectionnel d'ondes élastiques de l'invention. Il est constitué d'une sphère creuse 22 en matériau magnétostrictif constituant la membrane et est muni en deux points diamétralement opposés de connexions électriques 24 et 26 constituant les bornes du moyen de commande électrique.

Les matériau magnétostrictifs sont bien connus de l'homme de l'art. Rappelons simplement qu'ils sont classés en quatre groupes principaux qui sont les alliages métalliques, les ferrites, les composés fer-terres rares et les composés amorphés magnétiques ou verres métalliques. Parmi les alliages métalliques les plus utilisés, on peut citer le nickel polycristallin, certains alliages fer-nickel, fer-aluminium, nickel-cobalt et fer-cobalt.

Les alliages de nickel-cobalt sont des matériaux intéressants en ce qu'ils cumulent les avantages de posséder un fort coefficient de couplage électromécanique, d'être faciles à fabriquer et d'être très résistants à la corrosion. A titre d'exemple, un matériau comprenant 96% de nickel et 4% de cobalt a un coefficient de couplage électromécanique de 0,5.

La sphère 22 est une sphère pulsante homogène. Ainsi, lorsqu'une différence de tension est appliquée entre les connexions 24 et 26 de la sphère, tous les points de la sphère constituent des émetteurs identiques d'ondes élastiques et la sphère est par conséquent un émetteur d'onde élastique omnidirectionnel parfait.

Le courant traversant la sphère suit les méridiens 28. Ce courant est plus important par unité de surface près des pôles (connexions 24, 36) que près de l'équateur, ce qui favorise une plus grande amplitude de pulsation près des pôles. Cependant, les connexions 24, 26 rendent plus rigide la sphère près des pôles, ce qui limite l'amplitude de pulsation. Ces deux effets antagonistes s'équilibrent sensiblement, tous les éléments de surface de la sphère ont donc à peu près la même amplitude de vibration.

L'impédance entre les connexions 24, 26 est faible. Pour une sphère de quelques centimètre de diamètre et de quelques microns d'épaisseur, elle est de l'ordre de quelques dixièmes d'ohm. Cette impédance est faible et nécessite un transformateur d'adaptation 30 pour pouvoir être branché directement sur les amplificateurs usuels, utilisés par exemple dans le domaine de la haute fidélité.

Ce transformateur d'adaptation d'impédance peut être supprimé dans le cas où l'impédance de la sphère 22 entre les connexions 24, 26 est de quelques ohms. Le transducteur de la figure 3 en est une illustration.

Dans cette figure, les éléments identiques à ceux de la figure 2 portent les mêmes références. La sphère 22 s'obtient à partir de celle de la figure 2 par un découpage en bande analogue à celle obtenue en pelant un fruit. Un joint élastique 33 permet de reconstituer une sphère rigide.

L'impédance de la sphère, qui est fonction de la longueur d'un méridien 28 dans le transducteur de la figure 2, est fonction de la longueur et de la largeur de la bande magnétostrictive dans le transducteur de la figure 3. Elle est donc plus important dans ce dernier cas et peut être ajustée, pour une sphère fixée, en fonction de la largeur de la bande.

L'émetteur de l'invention présente l'avantage sur les appareils connus d'avoir une très large bande passante. A titre d'exemple, cette bande passante s'étend de quelques kilohertz à plusieurs centaines de kilohertz pour une sphère de 4 cm de diamètre. La fréquence centrale de la bande passante est liée à la taille de la sphère. Pour l'émission de fréquences basses, il faut déplacer un volume important de fluide (eau, air, ...); la sphère a dans ce cas un diamètre adéquat.

Des expériments ont montré que la puissance de l'onde élastique émise peut être appréciable. Cette puissance acoustique est principalement limitée par deux facteurs qui sont, d'une part, la saturation magnétique du matériel magnétostrictif par un champ magnétique trop intense et, d'autre part, l'échauffement excessif de la sphère. Il est intéressant de noter que la puissance relative maximale que l'on peut appliquer à la sphère est nettement plus importante si elle est plongée dans l'eau que si elle est plongée dans l'air. Une sphère en alliage Nickel-Cobalt de 4 cm de diamètre et de 0,01 mm d'épaisseur peut ainsi absorber sans problème une charge supérieur à 50 W.

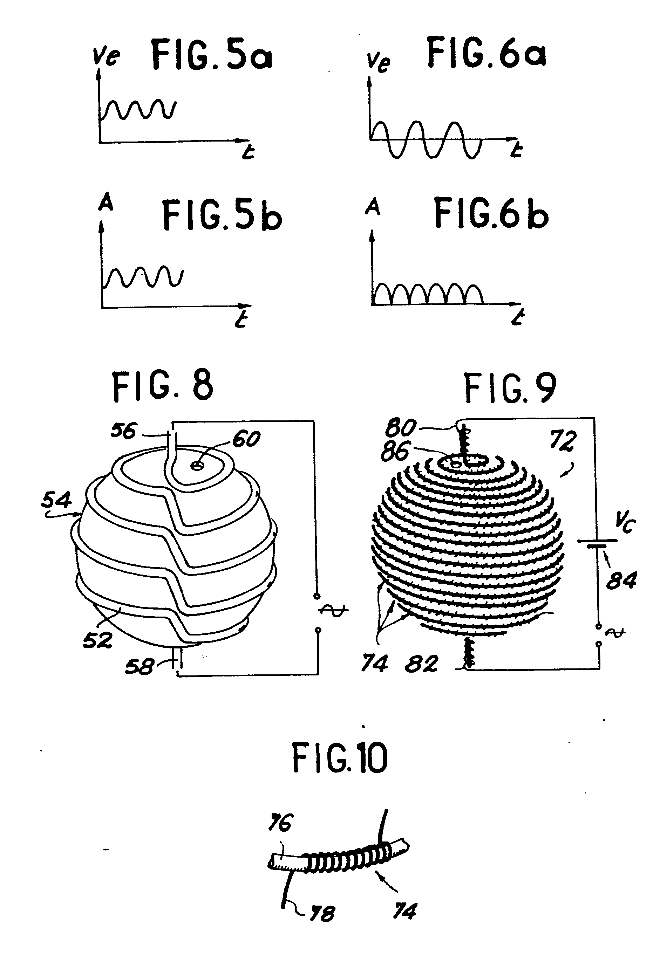

Selon un mode de réalisation préféré, la sphère 22 (figures 2 et 3) est polarisée en continu par une source de tension continue 32. Ceci permet de créer une onde acoustique dont l'amplitude A représentée sur la figure 5b est proportionnelle au signal de tension électrique $V_e$ appliqué aux bornes de la sphère 22 et représenté sur la figure 5a.

Lorsque le transducteur comprend un transformateur d'adaptation d'impédance 30 et une source de tension continue 32, comme c'est le cas du transducteur de la figure 2, ces deux éléments sont de préférence découplés. Ils sont disposés en parallèle aux bornes 24 et 26 de la sphère 22. Le montage est complété classiquement par un condensateur 29 en série avec le transformateur 30 pour empêcher la propagation d'un signal électrique continu dans le transformateur, et par une inductance 31 en série avec la source 32 pour empêcher la propagation d'un signal transitoire dans la source 32.

La polarisation de la sphère n'est pas obligatoire lorsque le transducteur est utilisé en émission mais ceci a pour conséquence de doubler les fréquences du signal électrique. En revanche, cette polarisation est nécessaire en réception. La tension appliquée aux pôles de la sphère est alors modulée par l'onde élastique reçue.

Les sphères représentées sur les figures 2 et 3 sont munies de deux orifices 34 qui permettent de maintenir égales les pressions sur ses surfaces interne et externe. Le nombre de ces orifices est quelconque, mais en général, un ou deux orifices sont suffisants. La taille de ces orifices est de préférence petite pour ne pas perturber l'homogénéité de la sphère.

Ces moyens d'égalisation ne sont pas nécessaires si la sphère est plongée dans l'air. En revanche, si elle est utilisée par exemple dans l'eau, la pression exercée sur la face externe de la sphère est important et doit être compensée. Les orifices 34 réalisant cette compensation.

Il est bien connu que l'eau pure est inélastique. Elle ne peut donc pas être utilisée pour remplir la sphère qui ne pourrait alors plus pulser. En revanche, il n'y a pas d'inconvénient à utiliser de l'eau naturelle (eau de mer, de lac, ...) qui, contenant de l'oxygène libre et des microorganismes, possède une certaine élasticité.

Les orifices peuvent être remplacés par un matériau élastique remplissant l'intérieur de la sphère. Dans ce dernier cas, la sphère est fabriquée de la manière suivante. On réalise une sphère dans un matériau élastique par exemple une mousse puis on dépose, selon tout procédé connu et par exemple par évaporation sous vide, une couche homogène de matériau magnétostrictif sur toute la surface de cette sphère.

On va maintenant décrire un mode particulier de fabrication de la sphère creuse en un seul élément représentée sur la figure 2. On réalise d'abord un moule sphérique creux en une matière rigide, par exemple en matière plastique. On peut par exemple utiliser une matière plastique semblable à celle qui est utilisée pour la fabrication des balles de ping-pong. Comme ces dernières, le moule sphérique pourra être réalisé par collage de deux hémisphères.

On recouvre ensuite le moule sphérique d'une couche d'un matériau électriquement conducteur, par exemple un métal tel que cuivre. Cette couche se fait selon des techniques connues telles que le dépôt chimique en phase vapeur. L'épaisseur de cette couche est par exemple de 0,01 mm. On dépose ensuite une couche de matériau magnétostrictif par électrolyse. Ce matériau magnétostrictif est par exemple un alliage nickel-cobalt et son épaisseur peut être de l'ordre de 0,01 mm pour une sphère ayant un diamètre de 4 cm.

Dans une étape suivante, on perce deux trous en deux points diamétralement opposés de la sphère. Ces trous permettent d'éliminer le moule creux et la couche électriquement conductrice. Ils seront utilisés ultérieurement pour recevoir les connexions 24 et 26.

On plonge alors la sphère dans un bain pour dissoudre le moule. Dans le cas où ce moule est en une matière plastique semblable à celle des balles de ping-pong, la dissolution s'obtient aisément par immersion de la sphère dans l'acétone. Enfin, on élimine la couche électriquement conductrice par une attaque chimique n'attaquant pas le nickel.

La sphère creuse en matériau magnétostrictif est lors réalisée. Il ne reste plus qu'à souder les fils électriques au niveau des deux trous de la sphère de manière à réaliser les connexions 24 et 26. On peut enfin percer un ou plusieurs orifices 34 pour égaliser les pressions interne et externe si la sphère est utilisée dans l'eau (hydrophone) ou dans un liquide en général.

Une variante du procédé de fabrication de la sphère consiste à déposer directement, par exemple par dépôt électrolytique, la couche de matériau magnétostrictif sur le moule. Ceci permet de supprimer l'étape de dépôt d'une couche de matériau électriquement conducteur. Le demandeur a réalisé des sphères suivant chacun des ces procédés. Elles sont réalisées en un alliage comprenant environ 90% de nickel et 10% de cobalt.

De manière générale, toute méthode connue de dépôt sur un moule peut être utilisée.

On a décrit deux procédés de fabrication d'une sphère en un seul élément. Ces procédés de fabrication peuvent être délicats à mettre en oeuvre dans certains cas particuliers, notamment lorsque l'on désire réaliser une sphère ayant un diamètre important (supérieur à une dizaine de centimètres, par exemple). Dans ce cas, il peut être préférable de fabriquer séparément deux hémisphères identiques en matériau magnétostrictif et de souder ensuite ensemble ces deux hémisphères.

Une sphère obtenue suivant ce procédé de fabrication est représentée schématiquement sur la figure 4. Cette sphère est constituée de deux hémisphères creux 36 et 38 composés chacun d'un grillage magnétostrictif 37, ou de matériaux analogues tels qu'une toile, une tôle fine percée de trous ou autre, recouvert du ou noyé dans une couche électriquement isolante 39. Cette couche permet de boucher les trous du grillage, ce qui est nécessaire pour obtenir un bon rendement de conversion électro-acoustique. Ce grillage a une maille de l'ordre de 1 mm de côté. Les deux séries de fils croisés peuvent être toutes les deux en matériau magnétostrictif. Mais ou peut également utiliser un grillage dont seule la série de fils formant les méridiens de la sphère (les connexions 24 et 26 formant les pôles) sont en matériau magnétostrictif, l'autre série de fils pouvant être en matière quelconque, notamment électriquement isolante. Lorsque ce mode de réalisation est utilisé pour la génération des sous dans l'air, cette couche isolante peut être obtenue par l'application d'une matière telle que celle utilisée pour la fabrication des haut-parleurs classiques.

Pour faciliter leur raccordement par soudage, la base de chaque hémisphère peut comprendre une collerette 40 et 42. Les deux hémisphères sont réunis par exemple par soudage à l'étain ou soudage sous argon, le cordon de soudure venant s'appuyer sur chaque collerette.

De préférence, les connexions 24 et 28 sont réalisées en deux points diamétralement opposés de la sphère situés sur le cordon de soudure. Ceci permet d'avoir une sphère pulsante pratiquement homogène puisque tous les méridiens reliant les deux connexions 24 et 26 qui forment les pôles sont identiques à l'exception des deux seuls méridiens correspondant au cordon de soudure 44.

La sphère 22 représentée sur la figure 4 fonctionne exactement de la même manière que la sphère 22 représentée sur la figure 2. Elle peut être utilisée aussi bien en émission qu'en réception. En émission, elle peut être polarisée ou non; en réception, elle droit être polarisée.

Dans le cas où la sphère est utilisée en émission et n'est pas polarisée, comme on l'a représenté à titre d'exemple sur la figure 4, le signal électrique alternatif qui doit être converti en une onde élastique est transmis directement aux deux connexions 24 et 36 et la sphère par l'intermédiaire d'un adaptateur d'impédance qui peut être un simple transformateur 30.

Les figures 6a et 6b illustrent la relation entre le signal électrique $V_e$ appliqué aux connexions 24 et 26 de la sphère 22 de la figure 4 et la caractéristique A de l'onde élastique émise en l'absence de polarisation de la sphère. La sphère constitue ici un émetteur qui double la fréquence du signal électrique.

La sphère représentée sur la figure 4 peut également être réalisée à partir de deux hémisphères ayant chacun une structure identique à celle de la sphère représentée sur la figure 1. Les hémisphères sont fabriqués de la même manière que la sphère de la figure 1 puis sont réunis par soudage, collage ou autre.

Une autre méthode, efficace, facile et bon marché, de fabrication d'hémisphères en matière magnétostrictive, est l'emboutissage. Cette technique permet d'obtenir sans difficultées des hémisphères de plusieurs dizaines de centimètre de diamètre. Ceci est particulièrement avantageux car un transducteur unique peut alors reproduire toutes les fréquences du spectre sonore.

On a représenté sur les figures 7 et 8 un deuxième mode de réalisation du transducteur de l'invention. Dans ces figures, la membrane est une sphère magnétostrictive et le moyen de commande est un conducteur électrique isolé bobiné autour de cette membrane. A la différence du premier mode de réalisation illustré par les figures 2 à 4, il n'y a plus dans le transducteur selon les figures 7 et 8 de contact électrique entre la membrane et le moyen de commande électrique.

Une première variante de ce deuxième mode de réalisation est représentée sur la figure 7. Ce transducteur comprend une sphère creuse 50 en matériau magnétostrictif autour de laquelle est bobiné un conducteur électrique isolé 52, formant ainsi une bobine sphérique 54.

La sphère creuse 50 est réalisée en un seul élément par dépôt, par exemple par évaporation sous vide, d'une couche d'alliage au nickel sur un moule sphérique, perçage d'un trou dans la sphère puis élimination du moule par dissolution.

La bobine 54 est réalisée par exemple en fil de cuivre ayant un diamètre de l'ordre de 0,1 mm à 0,2 mm pour une sphère de quelques centimètres de diamètre. Ce fil de cuivre est isolé électriquement par émaillage, gainage ou autre. Les spires de la bobine sont de préférence jointives, ce qui améliore l'homogénéité et la sensibilité du transducteur. La rigidité de la bobine est assurée par une couche d'enrobage appropriée (non représentée).

Les extrémités 56 et 58 de la bobine 54 qui constituent les bornes du moyen de commande électrique permettent, en émission, d'appliquer un signal de tension alternatif qui est transformé par la sphère en une onde élastique. A la réception, il se crée aux extrémités 56, 58 de cette bobine un signal de tension alternatif correspondant à l'onde élastique reçue, pourvu que comme dans le cas précédentes une polarisation magnétique de la sphère soit prévue.

Ce mode de réalisation présente l'avantage que l'impédance entre les bornes du moyen de commande électrique est de l'ordre de quelques ohms (pour une bobine de quelques centimètres de diamètre en fil de cuivre de 0,1 mm de diamètre à spires jointives) alors que dans les transducteurs des figures 2 et 4, cette impédance est beaucoup plus faible. Il est donc possible de supprimer dans la plupart des cas le transformateur d'adaptation d'impédance.

Dans le cas d'une utilisation du transducteur dans un fluide tel que l'eau, la sphère doit être équipée de moyens pour égaliser ses pressions interne et externe. Cette égalisation peut être réalisée simplement par au moins un orifice 60 dans la sphère afin de remplir ladite sphère avec le fluide désiré. Ces orifices, ne devant pas être recouverts par la bobine 54, pourront être disposés avantageusement près d'une extrémité 56 ou 58 de cette bobine. Ces moyens d'égalisation sont surtout nécessaires si le transducteur est utilisé à une profondeur importante, dans le cas de l'eau. Ils sont inutiles si la profondeur de travail est faible.

Le transducteur représenté sur la figure 7 peut être complété par une source de polarisation. Tout moyen de polarisation connu de l'homme de l'art peut être employé, par exemple une source de tension continue comme on l'a représenté sur les figures 2 et 3 ou un aimant permanent 61 disposé dans la sphère. Le maintien en position de cet aimant peut être facilement obtenu lorsque l'intérieur de la sphère est remplie d'un matériau absorbant les ondes élastiques. La polarisation est nécessaire en réception. En revanche, le transducteur peut fonctionner en émission sans polarisation. Dans ce cas cependent, l'onde élastique émise a une fréquence double du signal électrique alternatif appliqué.

Le fonctionnement du transducteur omnidirectionnel représenté sur la figure 7 est le suivant. En réception, une onde élastique reçue engendre une pulsation de la sphère en matériau magnétostrictif. Cette pulsation induit un courant électrique dans la bobine 54 et donc une modulation de la différence de potentiel entre les extrémités 56 et 58 de cette bobine. En émission, le phénomène est inversé: la variation de la différence de potentiel entre les extrémités 56 et 58 de la bobine, et donc du courant parcourant cette bobine, provoque une modification du champ magnétique dans cette bobine; cette modification entraîne la pulsation de la sphère 50 et donc l'émission d'une onde élastique.

Une variante du transducteur de la figure 7 est représentée sur la figure 8. Les spires du conducteur électrique 52 ne sont plus jointives, ce qui permet de ne pas augmenter l'impédance entre les extrémités 56 et 58 au-delà de quelques ohms, même si la sphère 22 est de grande dimension. Le conducteur électrique 52 est bobiné de manière à créer des spires dans un plan sensiblement perpendiculaire à l'axe passant par les extrémités 56 et 58. Dans cette variante de réalisation, la sphère peut atteindre plusieurs dizaines de centimètres de diamètre. Elle peut alors reproduire toutes les fréquences sonores (basses, médium et aigües) et être utilisée en reproduction sonore de haute fidélité comme haut-parleur universel.

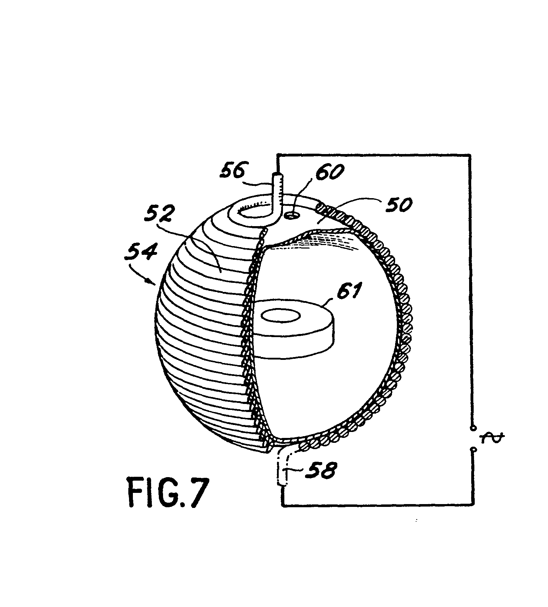

On a représenté sur les figures 9 et 10 un troisième mode de réalisation du transducteur omnidirectionnel d'ondes élastiques de l'invention.

Le transducteur représenté sur la figure 9 est constitué d'une bobine sphérique 72 obtenue par bobinage d'un fil 74. Pour des raisons de clarté de la figure, on a représenté une bobine à spires non jointives. Il faut noter toutefois qu'en pratique, un bobinage à spires jointives est préférable car l'omnidirectionalité est d'autant meilleure que la bobine est homogène.

Comme on l'a représenté sur la figure 10, ce fil 74 est constitué d'un fil 76 en matériau magnétostrictif sur lequel est bobiné un fil électriquement conducteur 78. Ce dernier est isolé électriquement du fil magnétostrictif. Il peut être constitué par exemple d'un fil de cuivre gainé ou émaillé.

Les extrémités de ce fil électriquement conducteur constituent les extrémités 80, 82 de la bobine sphérique et les bornes du moyen de commande électrique.

Selon un mode de réalisation préféré, la bobine sphérique 72 est polarisée en continu par exemple par une source de tension continue 84. La polarisation de la bobine sphérique n'est pas obligatoire lorsque le transducteur est utilisé en émission mais dans ce cas on double la fréquence du signal électrique alternatif appliqué. En revanche, cette polarisation est nécessaire en réception. La tension appliquée aux extrémités 80 et 82 du fil conducteur est alors modulée par l'onde élastique reçue.

De préférence, pour assurer la rigidité de la bobine sphérique, celle-ci est recouverte d'une couche d'enrobage appropriée (non représentée sur la figure 9). Cette couche comporte avantageusement au moins un orifice 86 disposé par exemple à proximité d'une des extrémités 80 et 82 du conducteur électrique, pour maintenir égales les pressions sur les surfaces interne et externe de la bobine sphérique, en permettant au fluide dans lequel est plongé le transducteur de pénétrer dans ladite bobine sphérique.

Les orifices d'égalisation des pressions interne et externe peuvent être remplacés par un matériau élastique remplissant l'intérieur de la sphère. Dans ce dernier cas, le fil magnétostrictif est directement bobiné sur la sphère en matériau élastique.

On va maintenant décrire un mode de fabrication du transducteur omnidirectionnel représenté sur la figure 9. Selon ce mode de fabrication, on réalise d'abord un moule sphérique creux en une matière rigide, par exemple en matière plastique. On peut par exemple utiliser une matière plastique semblable à celle qui est utilisée pour la fabrication des balles de ping pong. Comme ces dernières, le moule sphérique pourra être réalisé par collage de deux hémisphères.

On bobine ensuite le fil 74, constitué d'un fil 76 en matériau magnétostrictif sur lequel est enroulé un fil électriquement conducteur isolé 78; les extrémités du fil conducteur isolé 78 constituent les bornes permettant d'exciter le matériau magnétostrictif ou de détecter une pulsation de celui-ci. La bobine sphérique est ensuite rendue rigide par le dépôt d'une couche d'enrobage.

Dans une étape suivante, on perce au moins un orifice 86 dans cette couche d'enrobage, par exemple à proximité de l'une des extrémités du fil conducteur, de manière à permettre l'élimination du moule creux. Cette élimination est obtenue en plongeant la bobine sphérique dans un bain dissolvant ce moule. Dans le cas où le moule est en une matière plastique semblable à celle des balles de ping pong, cette dissolution est obtenue aisément par immersion de la bobine sphérique dans l'acétone. L'orifice ménagé pour dissoudre le moule permet également de maintenir égales les pressions interne et externe de la bobine.

L'invention a été décrite en référence à un transducteur à membrane magnétostrictive sphérique. Cet exemple a été choisi car la sphère est l'émetteur le plus omnidirectionnel et parce que cette forme est la plus performante dans la reproduction des basses fréquences pour une membrane de surface donnée. En effet, la limite inférieure en fréquence de la membrane est d'autant plus basse que le diamètre de la membrane est important.

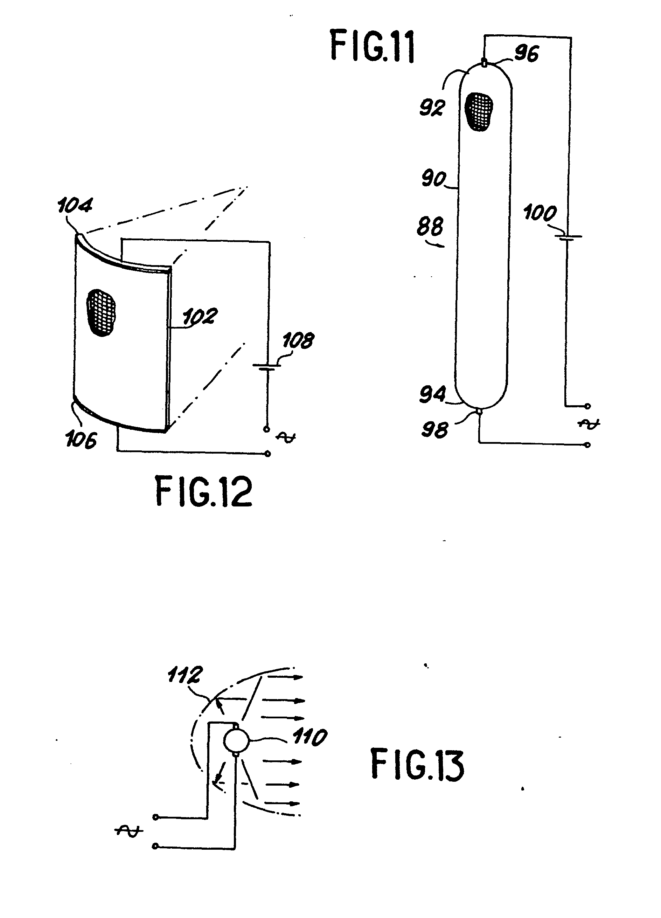

Cependant, l'invention n'est pas limitée à un transducteur comprenant une membrane sphérique. A titre d'exemple, on a représenté sur les figures 11 et 12 des transducteurs dont les membranes ont respectivement la forme d'un cylindre fermé et d'une portion de cylindre et sont composées d'un grillage en matériau magnétostrictif recouvert de ou noyé dans une couche électriquement isolante, comme dans le cas de la figure 4.

La membrane 88 du transducteur de la figure 11 se compose d'un cylindre 90 à base circulaire fermé à ses extrémités par deux hémisphères 92, 94. Les bornes du moyen de commande sont constituées par deux connexions 96, 98 fixées aux sommet des hémisphères 92, 94. Pour un cylindre suffisamment long, l'impédance entre les connexions est de quelques ohms et il n'est pas nécessaire de prévoir un adaptateur d'impédance dans le cas d'une utilisation en reproduction sonore de haute fidélité.

Dans ce cas un moyen de polarisation permanent du transducteur doit être prévu. Ce moyen est quelconque; à titre d'exemple le transducteur de la figure 11 est doté d'une source de tension continue 100.

Le transducteur représenté sur la figure 12 comporte une membrane 102 en forme de portion de cylindre. Cette surface est définie mathématiquement comme un ensemble de lignes parallèles de longueur finie s'appuyant sur un arc de cercle. Les bornes du moyen de commande sont constituées par des conducteurs électriques 104, 106 en forme d'arc de cercle et connectés sur les bords inférieure et supérieur de la membrane. Le transducteur peut être muni d'un moyen de polarisation continue telle qu'une source de tension continue 108. Dans le cas où l'émission d'ondes élastiques n'est souhaité que vers l'extérieur, c'est-à-dire du côté convexe de la membrane, la face intérieure, c'est-à-dire concave, peut être recouverte d'un matériau absorbant les ondes élastiques.

Bien que le but de l'invention ait été de proposer un émetteur et un récepteur omnidirectionnels d'ondes élastiques, le transducteur de l'invention peut également trouver une application dans l'émission ou la réception d'ondes élastiques très directive. Un exemple d'une telle application est représenté sur la figure 13 dans le cas où la membrane est sphérique.

Sur cette figure, la membrane sphèrique 112 est placée au foyer d'un paraboloïde de révolution 112. Ce montage permet d'obtenir, en émission, une onde élastique unidirectionnelle de grande intensité et en réception, un détecteur de grande sensibilité.

En conclusion, on trouvera résumés ci-après les principaux avantages du transducteur de l'invention:
—omnidirectionnalité parfaite
—très large bande passante
—émetteur puissant, notamment dans les liquides, par exemple dans l'eau (hydrophone)
—détecteur sensible
—transducteur simple, donc fiable et peu coûteux
—facilité de fabrication.

L'invention a été décrite en référence à des modes particuliers de réalisation. Il est bien entendu que l'invention n'est pas limitée à ces modes de réalisation, mais inclut au contraire tous les transducteurs comprenant une membrane magnétostrictive et un moyen de commande électrique de cette membrane quels qui soient la forme de la membrane, la structure de la membrane, le type de moyen de commande électrique, l'agencement de ce moyen de commande par rapport à la membrane et le procédé de fabrication.

**Revendications**

1. Transducteur omnidirectionnel d'ondes élastiques à large bande passante comprenant une membrane de forme sphérique magnétostrictive rigide (22; 54; 72; 88; 102), chaque élément de surface constituant un transducteur unidirectionnel d'ondes élastiques suivant sa direction normale, un moyen de commande électrique muni de deux bornes électriques (24—26; 56—58; 80—82; 96—98; 104—106) reliées à la membrane (22; 54; 72; 88; 102) pour délivrer un signal électrique en rapport avec la variation du champ magnétostrictif dans la membrane (22; 54; 72; 88; 102) en fonction d'une onde élastique reçue, caractérisé en ce qu'il comprend un moyen de polarisation continue (32; 61; 84; 100; 108) de la membrane (22; 54; 72; 88; 102), les deux bornes électriques (24—26; 56—58; 80—82; 96—98; 104—106) du moyen de commande électrique étant respectivement reliées électriquement à deux points diamétralement opposés de la membrane sphérique magnétostrictive (22; 54; 72; 88; 102), pour créer au voisinage de celle-ci un champ magnétique homogène en rapport avec un signal électrique appliqué aux bornes électriques (24—26; 56—58; 80—82; 96—98; 104—106) du moyen de commande électrique.

2. Transducteur selon la revendication 1, caractérisé en ce que le moyen de polarisation continue est une source de tension continue reliée auxdites deux bornes électriques.

3. Transducteur selon la revendication 1, caractérisé en ce que le moyen de polarisation continue est un aimant permanent situé à l'intérieur de ladite membrane.

4. Transducteur selon la revendication 1, caractérisé en ce que la membrane comprend une surface sphérique en matériau magnétostrictif et une couche d'enrobage électriquement isolante.

5. Transducteur selon la revendication 4, caractérisé en ce que la surface sphérique en matériau magnétostrictif est un grillage en matériau magnétostrictif (37).

6. Transducteur selon la revendication 4, caractérisé en ce que la surface sphérique en matériau magnétostrictif est un fil magnétostrictif bobiné (76) autour duquel est enroulé un fil électrique (78) isolé électriquement du fil magnétostrictif, les extrémités (80, 82) dudit fil électrique constituant les bornes du moyen de commande électrique.

7. Transducteur selon la revendication 1, caractérisé en ce que la membrane sphérique (22) est composée d'une couche en matériau magnétostrictif.

8. Transducteur selon l'une quelconque des revendications 4, 5 et 6, caractérisé en ce que le moyen de commande est un fil électrique (78) isolé électriquement et bobiné sur la surface de la membrane sphérique, les bornes du moyen de commande étant constituées par les extrémités (80, 82) dudit fil électrique.

9. Transducteur selon la revendication 1, caractérisé en ce que la membrane sphérique comprend des moyens (34) d'égalisation de ses pressions interne et externe.

10. Transducteur selon l'une quelconque des revendications 1 et 9, caractérisé en ce que le volume intérieur de la membrane sphérique est rempli d'un matériau absorbant les ondes élastiques.

11. Procédé de fabrication d'un transducteur omnidirectionnel d'ondes élastiques à large bande passante selon la revendication 1, comprenant une étape de fabrication de la membrane en matériau magnétostrictif de forme sphérique, caractérisé en ce qu'il comporte une étape de positionnement du moyen de commande électrique, muni de deux bornes électriques (24—26; 56—58; 80—82; 96—98; 104—106) pour créer au voisinage de la membrane un champ magnétique homogène en rapport avec un signal électrique appliqué aux bornes du moyen de commande ou pour délivrer un signal électrique en rapport avec la variation du champ magnétique dans la membrane en fonction d'une onde élastique reçue, une étape de mise en place du moyen de polarisation continue de la membrane, l'étape de fabrication de la membrane comprenant au moins les opérations successives suivantes:

—réalisation d'un moule ayant la forme sphérique de la membrane à fabriquer,

—formation sur le moule de la membrane de matériau magnétostrictif,

—élimination de moule.

12. Procédé selon la revendication 11, caractérisé en ce que la membrane sphérique de matériau magnétostrictif est une couche de ce matériau déposée sur le moule avant son élimination.

13. Procédé selon la revendication 11, caractérisé en ce que la formation de la membrane sphérique de matériau magnétostrictif consiste à mettre en forme une surface grillagée en matériau magnétostrictif par application de cette surface sur le moule, puis à déposer une couche d'enrobage électriquement isolant sur et autour de la surface grillagée.

14. Procédé de fabrication selon la revendication 11, caractérisé en ce que la formation de la membrane sphérique de matériau magnétostrictif consiste à bobiner sur le moule un fil d'un matériau magnétostrictif, puis à enrober ce fil dans une couche d'enrobage électriquement isolante.

15. Procédé selon la revendication 13, caractérisé en ce qu'il consiste à enroule un fil électriquement isolé autour du fil en matériau magnétostrictif avant de bobiner ce dernier sur le moule, puis à enrober le fil isolé et le fil magnétostrictif dans une couche d'enrobage électriquement isolante.

16. Procédé selon la revendication 11, caractérisé en ce que la formation de la membrane sphérique de matériau magnétostrictif consiste à bobiner sur le moule une bande de matériau magnétostrictif, les enroulements de cette band étant séparés par un joint élastique après élimination du moule.

17. Procédé selon l'une quelconque des revendications 11 à 14, caractérisé en ce que, la membrane sphérique formant une surface fermée, il consiste à munir l'intérieur de la membrane d'un matériau absorbant les ondes élastiques, après l'élimination du moule.

18. Procédé selon l'une quelconque des revendications 11 et 12, caractérisé en ce que, la membrane sphérique formant une surface fermée, il consiste à percer au moins une ouverture dans cette membrane.

19. Procédé selon l'une quelconque des revendications 13 et 14, caractérisé en ce que la membrane sphérique formant une surface fermée, il consiste à percer au moins une ouverture dans l'enrobage isolant.

**Patentansprüche**

1. Allseitiger Breitbandwandler elastischer Wellen mit einer steifen, magnetostriktiven Membran in Kugelform (22; 54; 72; 88; 102), wobei jedes Oberflächenelement einen einseitigen Wandler elastischer Wellen entlang seiner Normalrichtung bildet, mit einer elektrischen Steuereinheit mit zwei elektrischen Anschlußklemmen (24—26; 56—58; 80—82; 96—98; 104—106), die mit der Membran (22; 54; 72; 88; 102) verbunden sind, um ein elektrisches Signal in Verbindung mit der Änderung des magnetostriktiven Feldes in der Membran (22; 54; 72; 88; 102) in Abhängigkeit einer empfangenen elastischen Welle zu übergeben, dadurch gekennzeichnet, daß er eine Vorrichtung (32; 61; 84; 100; 108) zur kontinuierlichen Polarisation der Membran (22; 54; 72; 88; 102) aufweist, wobei die beiden elektrischen Anschlußklemmen (24—26; 56—58; 80—82; 96—98; 104—106) der Steuereinheit jeweils elektrisch mit zwei diametral gegenüberliegenden Punkten der kugelförmigen, magnetostriktiven Membran (22; 54; 72; 88; 102) verbunden sind, um in der Nachbarschaft dieser ein homogenes Magnetfeld in Zusammenhang mit einem an die elektrischen Anschlußklemmen (24—26; 56—58; 80—82; 96—98; 104—106) der elektrischen Steuereinheit angelegten elektrischen Signal zu erzeugen.

2. Wandler nach Anspruch 1, dadurch gekennzeichnet, daß die Vorrichtung zur kontinuierlichen Polarisation eine kontinuierliche, mit den beiden elektrischen Anschlußklemmen verbundene Spannungsquelle ist.

3. Wandler nach Anspruch 1, dadurch gekennzeichnet, daß die Vorrichtung zur kontinuierlichen Polarisation ein im Innern der Membran befindlicher Permanentmagnet ist.

4. Wandler nach Anspruch 1, dadurch gekennzeichnet, daß die Membran eine kugelförmige Oberfläche aus magnetostriktivem Material und eine elektrisch isolierende Verkleidungsschicht aufweist.

5. Wandler nach Anspruch 4, dadurch gekennzeichnet, daß die kugelförmige Oberfläche aus magnetostriktivem Material ein Gitter aus magnetostriktivem Material ist.

6. Wandler nach Anspruch 4, dadurch gekennzeichnet, daß die kugelförmige Oberfläche aus magnetostriktivem Material ein spulenförmiger, magnetostriktiver Draht (76) ist, um den ein von dem magnetostriktivem Draht elektrisch isolierter elektrischer Draht (78) gewickelt ist, wobei die Enden (80, 82) des elektrischen Drahts die Anschlußklemmen der elektrischen Steuereinheit bilden.

7. Wandler nach Anspruch 1, dadurch gekennzeichnet, daß die kugelförmige Membran (22) aus einer Schicht aus magnetostriktivem Material zusammengesetzt ist.

8. Wandler nach einem der Ansprüche 4, 5 und 6, dadurch gekennzeichnet, daß die Steuereinheit ein elektrisch isolierter elektrischer Draht (78) ist, der auf der Oberfläche der kugelförmigen Membran gewickelt ist, wobei die Anschlußklemmen der Steuereinheit von den Enden (80, 82) des elektrischen Drahts gebildet wird.

9. Wandler nach Anspruch 1, dadurch gekennzeichnet, daß die kugelförmige Membran eine Vorrichtung (34) Ausgleich von inneren und äußeren Drücken aufweist.

10. Wandler nach einem der Ansprüche 1 bis 9, dadurch gekennzeichnet, daß das interne Volumen der kugelförmigen Membran mit einem die elastischen Wellen absorbierenden Material gefüllt ist.

11. Verfahren zur Herstellung eines allseitigen Breitbandwandlers elastischer Wellen nach Anspruch 1 mit einem Herstellungsschritt der Membran aus einem magnetostriktivem Material in Kugelform, dadurch gekennzeichnet, daß es einen Schritt zum Positionieren der mit zwei elektrischen Anschlußklemmen (24—26; 56—58; 80—82; 96—98; 104—106) versehenen elektrischen Steuereinheit zum Erzeugen eines homogenen magnetischen Feldes in der Nähe der Membran in Zusammenhang mit einem auf die Anschlußklemmen der Steuereinheit angewandten elektrischen Signal oder zum Abgeben eines elektrischen Signal im Zusammenhang mit der Änderung des Magnetfeldes in der Membran in Abhängigkeit einer empfangenen elastischen Welle und einen Schritt zum Anordnen der Vorrichtung zu kontinuierlichen Polarisation der Membran aufweist, der wenigstens folgende sukzessive Arbeiten aufweist:

— das Herstellen einer Rohform in der kugelförmigen Form der herzustellenden Membran,

— das Herstellen der Membran aus magnetostriktivem Material auf der Hohlform,

— das Entfernen der Hohlform.

12. Verfahren nach Anspruch 11, dadurch gekennzeichnet, daß die kugelförmige Membran aus magnetostriktivem Material eine Schicht aus diesem Material ist, die vor ihrem Entfernen auf der Hohlform aufgebracht wird.

13. Verfahren nach Anspruch 11, dadurch gekennzeichnet, daß die Herstellung der kugelförmigen Membran aus magnetostriktivem Material die Bildung einer gitterförmigen Oberfläche aus magnetostriktivem Material durch Aufbringen dieser Oberfläche auf die Hohlform und das anschließende Aufbringen einer elektrisch isolierenden Verkleidungsschicht auf und um die gitterförmige Oberfläche umfaßt.

14. Verfahren nach Anspruch 11, dadurch gekennzeichnet, daß die Herstellung der kugelförmigen Membran aus magnetostriktivem Material die Bildung einer Spule auf der Hohlform aus einem Draht aus magnetostriktivem Material mit anschließendem Verkleiden des Drahts mit einer elektrisch isolierenden Verkleidungsschicht besteht.

15. Verfahren nach Anspruch 13, dadurch gekennzeichnet, daß es aus dem Aufwickeln eines elektrisch isolierenden Drahts um den Draht aus magnetostriktivem Material vor dem Bilden einer Spule mit diesem auf der Hohlform und anschließendem Verkleiden des isolierten Drahts und des Drahts aus magnetostriktivem Material mit einer elektrisch isolierenden Verkleidungsschicht besteht.

16. Verfahren nach Anspruch 11, dadurch gekennzeichnet, daß die Herstellung der kugelförmigen Membran aus magnetostriktivem Material die Bildung einer Spule auf der Hohlform aus einem Band aus magnetostriktivem Material umfaßt, wobei die Wicklungen dieses Bandes durch elastische Gelenke nach Entfernen der Hohlform getrennt sind.

17. Verfahren nach einem der Ansprüche 11 bis 14, dadurch gekennzeichnet, daß es aus dem Aufbringen eines die elastischen Wellen absorbierenden Materials auf das Innere der Membran nach Entfernen der Hohlform besteht, wobei die kugelförmige Membran eine geschlossene Oberfläche bildet.

18. Verfahren nach einem der Ansprüche 11 und 12, dadurch gekennzeichnet, daß es aus dem Durchstoßen von wenigstens einer Öffnung in dieser Membran besteht, wobei die kugelförmige Membran eine geschlossene Oberfläche bildet.

19. Verfahren nach einem der Ansprüche 13 und 14, dadurch gekennzeichnet, daß es aus dem Durchstoßen von wenigstens einer Öffnung in der Isolierenden Verkleidung besteht, wobei die kugelförmige Membran eine geschlossene Oberfläche bildet.

## Claims

1. Omnidirectional, wide pass band, elastic wave transducer comprising a rigid magnetostrictive diaphragm (22, 54, 72, 88, 102), each surface element of the diaphragm constituting a unidirectional, elastic wave transducer in its normal direction, and an electric control means provided with two electric terminals (24—26, 56—58, 80—82, 96—98, 104—106) connected to the diaphragm (22, 54, 62, 88, 102) for supplying an electric signal related to the variation of the magnetostrictive field in the diaphragm (22, 54, 72, 88, 102) as a function of an elastic wave received, characterized in that it comprises a continuous polarization means (32, 61, 84, 100, 108) for the diaphragm (22, 54, 72, 88, 102), the two electric terminals (24—26, 56—58, 80—82, 96—98, 104—106) of the electric control means being respectively electrically connected to two diametrically opposite points of the magnetostrictive spherical diaphragm (22, 54, 72, 88, 102) for creating, in the vicinity thereof, a homogeneous magnetic field relative to an electric signal applied to the electric terminals (24—26, 56—58, 80—82, 96—98, 104—106) of the electric control means.

2. Transducer according to claim 1, characterized in that the continuous polarization means is a d.c. voltage source connected to said two electric terminals.

3. Transducer according to claim 1, characterized in that said continuous polarization means is a permanent magnet located within said diaphragm.

4. Transducer according to claim 1, characterized in that the diaphragm comprises a magnetostrictive material spherical surface and an electrically insulating coating layer.

5. Transducer according to claim 4, characterized in that the magnetostrictive material spherical surface is a magnetostrictive material grating (37).

6. Transducer according to claim 4, characterized in that the spherical magnetostrictive material surface is a coiled magnetostrictive wire (76) about which is wound an electric wire (78) electrically insulated from the magnetostrictive wire, the ends (80, 82) of said electric wire constituting the terminals of the electric control means.

7. Transducer according to claim 1, characterized in that the spherical diaphragm (22) is formed by a magnetostrictive material layer.

8. Transducer according to any one of the claims 4, 5, and 6, characterized in that the control means is an electrically insulated electric wire (78) wound on to the surface of the spherical diaphragm, the terminals of the control means being constituted by the ends (80, 82) of said electric wire.

9. Transducer according to claim 1, characterized in that the spherical diaphragm comprises means (32) for equalizing the internal and external pressures.

10. Transducer according to one of the claims 1 and 9, characterized in that the internal volume of the spherical diaphragm is filled with an elastic wave-absorbing material.

11. Process for the production of an omnidirectional, wide pass band, elastic wave transducer according to claim 1 comprising a stage of producing the spherical diaphragm for a magnetostrictive material, characterized in that it comprises a stage of positioning the electric control means, provided with two electric terminals (24—26, 56—58, 80—82, 96—98, 104—106) for creating in the vicinity of the diaphragm a homogeneous magnetic field related to the electric signal applied to the terminals of the control means or for supplying an electric signal related to the variation of the magnetic field in the diaphragm as a function of an elastic wave received, a stage of putting into place the continuous polarization means for the diaphragm, the stage of producing the diaphragm comprising, successively, the operations of producing a mould having the spherical shape of the diaphragm to be produced, the formation on the mould of the magnetostrictive material diaphragm and the elimination of the mould.

12. Process according to claim 11, characterized in that the spherical magnetostrictive material diaphragm is a layer of said material deposited on the mould prior to the elimination of the latter.

13. Process according to claim 11, characterized in that the formation of the spherical magnetostrictive material diaphragm consists of shaping a lattice magnetostrictive material surface by the application of said surface to the mould and then depositing an electrically insulating coating layer on and around the lattice surface.

14. Production process according to claim 11, characterized in that the formation of the spherical magnetostrictive material membrane consists of winding on to the mould a magnetostrictive material wire and then coating the latter with an electrically insulating coating layer.

15. Process according to claim 13, characterized in that it consists of winding an electrically insulated wire around the magnetostrictive material wire prior to winding the latter on to the mould, then coating the insulated wire and the magnetostrictive wire with an electrically insulating coating layer.

16. Process according to claim 11, characterized in that the formation of the spherical magnetostrictive material diaphragm consists of winding on to the mould a magnetostrictive material strip, the windings of said strip being separated by an elastic joint following the elimination of the mould.

17. Process according to any one of the claims 11 to 14, characterized in that with the spherical diaphragm forming a closed surface, it consists of providing the interior of the diaphragm with an elastic wave-absorbing material, following the elimination of the mould.

18. Process according to either of the claims 11 and 12, characterized in that with the spherical diaphragm forming a closed surface, it consists of making at least one opening in said diaphragm.

19. Process according to either of the claims 13 and 14, characterized in that with the spherical diagram forming a closed surface, it consists of making at least one opening in the insulating layer.

FIG.1

FIG. 2

FIG. 3

FIG.4

FIG.5a

FIG.6a

FIG.5b

FIG.6b

FIG. 8

FIG.9

FIG.10

2

FIG.7

FIG.11

FIG.12

FIG.13